Europäisches Patentamt

European Patent Office

Office européen des brevets

(11) Numéro de publication : **0 028 975**
**B1**

(12) **FASCICULE DE BREVET EUROPÉEN**

(45) Date de publication du fascicule du brevet :
26.09.84

(51) Int. Cl.³ : **B 29 D 11/00**

(21) Numéro de dépôt : **80401580.8**

(22) Date de dépôt : **05.11.80**

(54) Dispositif pour la réalisation d'un verre composite, en particulier lentille ophtalmique.

(30) Priorité : **08.11.79 FR 7927530**

(43) Date de publication de la demande :
**20.05.81 Bulletin 81/20**

(45) Mention de la délivrance du brevet :
**26.09.84 Bulletin 84/39**

(84) Etats contractants désignés :
**BE CH DE GB IT LI NL SE**

(56) Documents cités :
**FR-A- 1 367 646**
**FR-A- 1 522 002**
**FR-A- 2 407 898**
**US-A- 2 357 345**
**US-A- 3 471 358**
**US-A- 3 528 135**
**US-A- 3 998 531**

(73) Titulaire : **ESSILOR INTERNATIONAL Cie Générale d'Optique**
**1 Rue Thomas Edison Echat 902**
**F-94028 Creteil Cedex (FR)**

(72) Inventeur : **Gave, Maurice**
**138, Rue Leroux**
**F-55500 Ligny-en-Barrois (FR)**

(74) Mandataire : **CABINET BONNET-THIRION**
**95 Boulevard Beaumarchais**
**F-75003 Paris (FR)**

## Description

La présente invention concerne d'une manière générale les verres composites, c'est-à-dire les verres qui sont réalisés partie en matière minérale et partie en matière organique.

Elle vise plus particulièrement, mais non exclusivement, les lentilles ophtalmiques, c'est-à-dire les lentilles destinées à l'équipement d'une monture de lunettes, qu'il s'agisse de lentilles correctrices, ou qu'il s'agisse de simples lentilles afocales.

Traditionnellement, les lentilles ophtalmiques sont le plus souvent réalisées d'un seul tenant, soit en matière minérale, soit en matière organique.

Les lentilles en matière minérale ont l'avantage d'une bonne résistance aux rayures ; en outre elles se prêtent relativement aisément à l'incorporation en leur sein de pigments photochromiques.

Mais elles ont l'inconvénient d'être lourdes, au détriment du confort de l'usager.

Les lentilles ophtalmiques en matière organique ont pour elles l'avantage de la légèreté.

Mais elles présentent l'inconvénient d'une dureté relativement médiocre, et donc d'une certaine sensibilité aux rayures.

En outre, malgré divers essais dans ce domaine, il n'a pas été encore possible à ce jour de réaliser de manière pratique des lentilles en matière organique à pigments photochromiques valablement commercialisables, notamment en raison de ce que la durée de vue de tels pigments photochromiques au sein d'une matière organique est actuellement insuffisante.

Diverses tentatives ont donc été faites pour associer de manière composite de la matière organique et de la matière minérale dans la réalisation d'un verre, et en particulier d'une lentille ophtalmique, pour bénéficier des avantages inhérents à chacune de ces matières.

C'est ainsi, notamment, que dans le brevet français FR no 1 522 002, il est décrit un procédé pour la réalisation d'un verre composite, suivant lequel on moule une matière organique en sandwich entre deux couches en matière minérale préformées, d'épaisseur relativement notable, de l'ordre de 2 mm, en envoyant cette matière organique à travers une ouverture d'un joint établi annulairement entre lesdites couches en matière minérale, cependant qu'une bande maintient l'assemblage correspondant.

Mais avec un tel mode d'assemblage il est difficile, sinon impossible, d'assurer un maintien convenable des couches en matière minérale, sauf si à la rigueur, comme prévu, elles ont une épaisseur importante.

Il est connu par ailleurs, par le brevet français no 1 367 646, et s'agissant non pas de la réalisation d'un verre composite, mais du simple moulage d'un verre classique en matière organique, de mettre en œuvre deux parois en verre minéral, formant moule, entre lesquelles est introduite la matière organique, et qui, pour leur maintien, d'une part, sont conjointement disposées dans un même joint, formant tube d'alignement, et qui, d'autre part, sont chacune contrebutées par une contreforme qui en est complémentaire.

Mais, compte tenu de l'épaisseur des parois en verre minéral en cause, les contreformes ainsi mises en œuvre ne s'étendent que localement sur une partie de celles-ci, et le tube d'alignement, plutôt que de maintenir et guider les parois en verre minéral, est porté par elles, cependant que les contreformes sont elles-mêmes convenablement supportées par un berceau formant support pour l'ensemble.

Il subsiste donc le problème de la réalisation d'un verre composite par moulage d'une masse en matière organique en sandwich entre deux parois ou couches d'épaisseur aussi réduite que possible pour minimiser le poids de l'ensemble, avec la nécessité qu'il y a alors d'une part de faciliter la manipulation de l'ensemble avant la mise en place de la matière synthétique, en évitant entre autres la casse des parois ou couches mises en œuvre, et d'autre part d'assurer un positionnement et un alignement précis de celles-ci, en empêchant un déplacement relatif de nature à perturber les caractéristiques optiques recherchées pour le verre composite fini à obtenir.

La présente invention a pour objet un dispositif apportant une solution simple et efficace à ce problème.

Ce dispositif, qui est donc destiné à permettre la réalisation d'un verre composite partie en matière minérale, partie en matière organique, est du genre comportant, pour permettre de mouler une masse de matière organique en sandwich entre deux couches en matière minérale préformées dont chacune est au moins en partie contrebutée par une contreforme complémentaire, un tube d'alignement, et est caractérisé en ce que, les deux couches en matière minérale étant chacune formées par une pellicule d'épaisseur réduite, comprise par exemple entre 0,1 et 0,5 mm, les contreformes sont complémentaires intérieurement du tube d'alignement, pour contact avec celui-ci.

Grâce à un tel dispositif, et malgré leur faible épaisseur, les couches, ou pellicules, en verre minéral mises en œuvre se trouvent en toute certitude convenablement maintenues.

L'objet de l'invention, ses caractéristiques et ses avantages, ressortiront d'ailleurs de la description qui va suivre, à titre d'exemple, en référence aux dessins schématiques annexés sur lesquels :

la figure 1 est une vue en coupe transversale d'un verre composite réalisable avec le dispositif suivant l'invention ;

la figure 2 est une vue en coupe de ce dispositif.

Ces figures illustrent à titre d'exemple l'applica-

tion de l'invention à la réalisation d'une lentille ophtalmique.

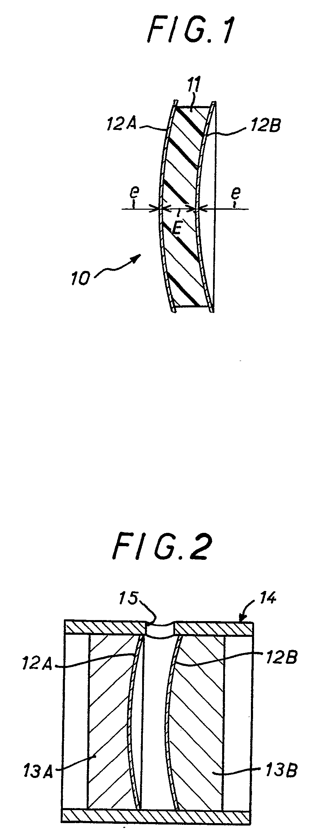

Tel que représenté à la figure 1, la lentille ophtalmique 10 recherchée est composite, en ce sens qu'elle est réalisée partie en matière minérale et partie en matière organique.

En pratique, elle comporte une masse de matière organique polymérisée 11 disposée en sandwich, entre deux couches de matière minérale, qui, suivant l'invention, sont chacune formées d'une pellicule de matière minérale 12A, 12B d'épaisseur réduite ; de préférence, et tel que représenté, la masse de matière organique polymérisée 11 est directement au contact des pellicules de matière minérale 12A, 12B.

La matière organique mise en œuvre pour la constitution de la masse 11 est de préférence choisie pour être capable de polymérisation sans retrait.

Il s'agit par exemple d'un polyuréthanne, d'un polyamide ou d'un polyméthacrylate tel la matière connue sous la désignation commerciale « PLEXIGLAS ».

Les pellicules 12A, 12B sont en matière minérale, du type de celles résultant de la fusion d'un sable siliceux et de carbonates.

Suivant l'invention, l'épaisseur au centre e de ces pellicules de matière minérale 12A, 12B est comprise entre 0,1 et 0,5 mm, et est de préférence voisine de 0,3 mm, alors que l'épaisseur au centre E de la masse de matière organique 11 est toujours supérieure à 1 mm.

Pour la réalisation du verre composite 10, on procède tout d'abord à la fabrication des pellicules de matière minérale 12A, 12B.

Chacune de celles-ci peut par exemple être obtenue à partir d'un flan initialement plat, par mise en forme d'un tel flan sur une surface matricielle de référence ayant la configuration recherchée, cette mise en forme étant effectuée par centrifugation, aspiration sous vide, soufflage d'air chaud, ou ultra-sons par exemple, à une température suffisante pour assurer le ramollissement de la matière minérale constitutive d'une telle pellicule sans en provoquer l'écoulement.

Diverses dispositions usuelles en la matière peuvent être adoptées pour éviter, lors de la mise en forme d'une pellicule de matière minérale 12A, 12B, le collage de cette pellicule sur la surface matricielle de référence utilisée à cet effet.

Par exemple, le matériau mis en œuvre pour constituer cette surface matricielle de référence peut être choisi de nature à éviter par lui-même un tel collage.

En variante, un film intermédiaire peut être interposé entre la surface matricielle de référence et la pellicule à mettre en forme, qu'il s'agisse d'un film gazeux ou liquide, ou qu'il s'agisse d'un film solide adhérent ou non à la pellicule et/ou à la surface matricielle de référence.

Suivant d'autres variantes, le collage peut être évité par refroidissement de la surface matricielle de référence, mise en œuvre d'une atmosphère gazeuse ou travail sous vide, choix d'un cycle thermique approprié, ou travail par ultra-sons.

A l'origine, les pellicules de matière minérale 12A, 12B peuvent être à faces parallèles, leur épaisseur étant constante en chacun de leurs points, étant entendu que cette épaisseur peut d'ailleurs être différente d'une de ces pellicules à l'autre.

Dans un tel cas, et dans la mesure où le verre composite 10 concerné doit apporter une correction, la mise en conformité de ce verre avec la prescription correspondante se fait ultérieurement, par usinage de la face extérieure de l'une et/ou de l'autre des pellicules de matière minérale 12A, 12B, après polymérisation de la masse de matière organique 11, et compte tenu de l'épaisseur éventuellement variable de celles-ci.

Sur celle des faces des pellicules de matière minérale 12A, 12B destinée à être à l'extérieur, il est possible, suivant des techniques usuelles en la matière, de déposer des couches de matériaux propres à en modifier les qualités de surface, par exemple pour leur conférer des propriétés anti-reflets, antibuées ou autre.

Cette intervention peut être pratiquée avant ou après la mise en forme de ces pellicules de matière minérale 12A, 12B.

De même, sur celle des faces des pellicules de matière minérale 12A, 12B destinée à être à l'intérieur du verre composite 10 recherché, il est possible de déposer, avant mise en place et polymérisation de la masse de matière organique 11, des couches de composants propres à assurer une coloration fixe, ou variable sous l'effet de l'éclairement ou du champ électrique, ou une absorption fixe ou variable par exemple.

De tels composants peuvent également être incorporés au sein même de ces pellicules, lors de la constitution du flan dont elles sont issues, notamment lorsqu'il s'agit de pigments photochromiques.

Une fois ainsi préformées les pellicules de matière minérale 12A, 12B à mettre en œuvre, on moule en sandwich entre elles, directement à leur contact par exemple, et à leur configuration, la masse de matière organique 11 qu'elles doivent enserrer.

Le dispositif mis en œuvre à cet effet suivant l'invention comporte deux contreformes 13A, 13B pour contrebutée des pellicules en matière minérale 12A, 12B, et un tube d'alignement 14, pour maintien de celles-ci.

Suivant l'invention, les contreformes 13A, 13B sont complémentaires intérieurement du tube d'alignement 14, pour contact avec celui-ci.

On procède dès lors comme suit.

Dans le tube d'alignement 14, on dispose les contreformes 13A, 13B auxquelles les pellicules de matière minérale 12A, 12B à mettre en œuvre sont solidarisées de manière temporaire, par exemple à la cire.

Un trou 15 du tube d'alignement 14 permet l'introduction par coulée de la matière organique à mouler.

Après moulage de cette matière organique, on en assure la polymérisation, suivant les techniques usuelles en la matière.

A cet effet, avant son moulage, cette matière organique est par exemple additionnée de manière usuelle du catalyseur propre à en assurer la polymérisation, et, après son moulage, elle est portée à une température suffisante pour initier cette polymérisation.

Bien entendu, des dispositions sont prises pour assurer une adhésion aux pellicules de matière minérale 12A, 12B de la masse de matière organique 11 moulée entre celles-ci.

Cette adhésion peut en fait résulter directement de la nature de la matière organique mise en œuvre.

Mais, si nécessaire, il peut être additionné à celle-ci un matériau propre à en assurer l'adhésion aux pellicules de matière minérale 12A, 12B.

En variante, avant mise en place de la matière organique à mouler, les pellicules de matière minérale 12A, 12B sont revêtues d'un matériau propre à favoriser l'adhésion recherchée.

Il s'agit par exemple d'un silane.

Quoi qu'il en soit, après polymérisation de sa masse de matière organique 11, le verre composite 10 obtenu suivant l'invention est isolé des contreformes utilisées lors de sa réalisation.

Il constitue alors une entité susceptible de subir sans désolidarisation les traitements usuellement appliqués aux lentilles ophtalmiques, et notamment un surfaçage et/ou un débordage.

Bien entendu, le domaine d'application de l'invention ne se limite pas à celui des seules lentilles ophtalmiques, mais s'étend d'une manière plus générale à celui des verres composites, éventuellement plats.

## Revendication

Dispositif pour la réalisation d'un verre composite (10) partie en matière minérale, partie en matière organique, du genre comportant, pour permettre de mouler une masse de matière organique en sandwich entre deux couches en matière minérale (12A, 12B) préformées dont chacune est au moins en partie contrebutée par une contreforme (13A, 13B) complémentaire, un tube d'alignement (14), caractérisé en ce que, les deux couches en matière minérale (12A, 12B) étant chacune formées par une pellicule d'épaisseur réduite, comprise par exemple entre 0,1 et 0,5 mm, les contreformes (13A, 13B) sont complémentaires intérieurement du tube d'alignement (14), pour contact avec celui-ci.

## Claim

Device for making a composite lens (10) partly of mineral material and partly of organic material comprising, for moulding a mass of organic material into a sandwich between two preformed layers of mineral material (12A, 12B) of which each one is at least partly supported by a complementary backing member (13A, 13B), an alignement tube (14) characterized in that each of the two layers (12A, 12B) of mineral material is formed by a film of reduced thickness, for example between 0.1 and 0.5 mm, and the backing members (13A, 13B) are complementary internally with the alignement tube (14) for contact therewith.

## Anspruch

Vorrichtung zur Herstellung eines Glases (10), das zusammengesetzt ist zum Teil aus einem mineralischen Material und zum Teil aus einem organischen Material, wobei zum Formen einer Masse aus organischem Material, die sandwichartig von zwei vorgeformten Schichten (12A, 12B) aus mineralischem Material eingefaßt ist, von denen jede wenigstens zum Teil gestützt wird von einer komplementären Gegenform (13A, 13B), ein Ausrichtrohr (14), vorgesehen ist, dadurch gekennzeichnet, daß jede der Schichten (12A, 12B) aus mineralischem Material als dünner Überzug geringer Stärke von beispielsweise 0,1 bis 0,5 mm ausgebildet ist, und daß die Gegenformen (13A, 13B) komplementär im Inneren des Ausrichtrohres (14) in Kontakt mit diesem angeordnet sind.

## FIG.1

## FIG.2